# FASCICULE DE BREVET EUROPEEN

(11) **EP 2 143 641 B1**
(45) Date de publication et mention de la délivrance du brevet: **06.05.2015**
(21) Numéro de dépôt: 09165191.9
(22) Date de dépôt: 10.07.2009
(51) Int. Cl.: B32B 7/12, B32B 9/00, B32B 27/04, B29K 63/00, B29K 67/00, B32B 27/08, B32B 27/12, B32B 27/30, B32B 27/36, B32B 27/38, B32B 37/12, B29L 9/00, B29C 61/06, B32B 1/00, B64G 1/10, B29K 105/08, B64G 1/22

(54) **Mètre ruban à déploiement thermique et structure déployable comportant ledit mètre ruban**
Meterband mit thermisch bedingter Entfaltung und entfaltbare Struktur, die mit besagtem Meterband ausgestattet ist
Tape measure with thermal unrolling and unrolling structure comprising such a tape measure

(30) Priorité: 11.07.2008 FR 0803986
(43) Date de publication de la demande: 13.01.2010
(73) Titulaire: THALES, 92400 Courbevoie (FR)
(72) Inventeur: Allezy, Arnaud, 77430 Champagne sur Seine (FR); Blanchard, Laurent, 06370 Mouans-Sartoux (FR); Hochard, Christian, 13402 Marseille Cedex 20 (FR); Guinot, François, 13402 Marseille Cedex 20 (FR)
(74) Mandataire: Esselin, Sophie

(56) Documents cités:
- EP-A- 0 363 919
- CAMPBELL D ET AL: "Development of a Novel, Passively Deployed Roll-Out Solar Array" AEROSPACE CONFERENCE, 2006 IEEE BIG SKY, MT, USA 04-11 MARCH 2006, PISCATAWAY, NJ, USA,IEEE, 4 mars 2006 (2006-03-04), pages 1-9, XP010928660 ISBN: 978-0-7803-9545-9

## Description

Le domaine de l'invention est celui des structures déployables pouvant avantageusement être utilisées dans des télescopes déployables ou dans tout autre système spatial ou non.

Actuellement, les demandes croissantes en matière de haute résolution, s'agissant aussi bien de l'observation de la Terre depuis l'Espace, que de l'observation de l'espace profond (détecter des objets très faiblement éclairés tout en maintenant le temps d'exposition sous les limites imposées par la capacité de stabilisation) nécessitent des systèmes d'observation spatiaux de plus en plus grands.

Par ailleurs, les missions d'observation de la Terre depuis une orbite géostationnaire sont envisageables avec les gains associés (plus grande stabilité thermique, moins de perturbations dues à la gravité, observation permanente au-dessus d'une zone) mais, compte tenu de l'éloignement, requièrent de plus grandes surfaces d'ouverture.

Pour mener à bien ces missions, des télescopes de très grande taille doivent être conçus et, dans beaucoup de cas, leurs dimensions excèdent le volume disponible sous la coiffe du lanceur.

La conception de tels systèmes engendre de multiples défis technologiques tels que le développement de structures déployables de grandes dimensions et de systèmes actifs permettant de corriger les incertitudes de positionnement après déploiement.

Le problème technique visé par la présente invention est celui de la conception d'éléments structuraux dont la longueur peut augmenter de manière autonome une fois le satellite mis à poste.

Différents concepts de structures déployables existent déjà : des structures rigides articulées (systèmes pantographiques par exemple), des systèmes reposant sur le principe des tenségrités (ensemble structural dans un état d'autocontrainte stable, constitué d'un ensemble discontinu de barres travaillant toutes en compression, reliées à un ensemble continu de câbles travaillant tous en tension), des barres composites pliables, des structures de type membrane souple, des barres gonflables polymérisables, des alliages à mémoire de forme, mais aussi des barres de type mètres rubans.

La demanderesse a déjà étudié et prouvé le potentiel d'une structure de télescope fondée sur un hexapode dont les jambes sont constituées de barres de type mètres rubans.

Toutefois, il a été montré, par une modélisation et des essais de déploiement associés, que le déploiement des mètres rubans est très violent et qu'il est difficile d'obtenir suffisamment de fiabilité pour permettre le déploiement autonome de la plate-forme.

Il peut alors être envisagé de réaliser ce déploiement soit au moyen de moteurs, soit au moyen d'un mécanisme de régulation (par exemple un mécanisme utilisé dans le déploiement des panneaux solaires reposant sur l'utilisation de systèmes à inertie, à dissipation visqueuse, à cisaillement de fluide...). Dans tous les cas, ces solutions sont relativement complexes et sources potentielles de défaillances.

Plus précisément, il a déjà été proposé pour réaliser des structures auto-déployables de mètres rubans, d'associer deux matériaux comportant une résine polymère à mémoire de forme qui permet de figer le ruban dans sa configuration enroulée puis de le forcer à se dérouler sous l'effet d'une élévation de température et un matériau composite à drapage bi-stable. Ce type de drapage autorise une transition de l'état enroulé à l'état déroulé et vice-versa en n'ayant à franchir qu'un très faible saut énergétique. De plus, chacun des deux états étant un état stable, le ruban peut rester enroulé sans effort de maintien.

Un exemple figure dans "Development of a Novel, Passively Deployed Roll-Out Solar Array", présenté par D. Campbell et al à la 2006 IEEE Aerospace Conference, Big Sky, MT, 4-11 mars 2006.

Néanmoins ce type de solution utilise des matériaux sophistiqués, chers et peu disponibles en quantités importantes.

Les résines à mémoire de forme, nécessitent un premier état initial dans lequel il convient de déformer le matériau en le chauffant, puis en figeant la déformation imposée.

Dans ce contexte la présente invention a pour objet un nouveau type de mètre ruban permettant de surmonter les inconvénients précités.

Plus précisément la présente invention a pour objet un ruban déployable ayant une courbure transversale dit mètre ruban comprenant un empilement d'au moins deux couches **caractérisé en ce qu**'il comporte en outre une première couche dite couche support à base de matériau composite comprenant une résine qui n'est pas à mémoire de forme et une couche dite couche supérieure à base d'un polymère présentant une température de transition vitreuse élevée de manière à ce que pour maintenir l'élément en position enroulée, ou replié, ledit polymère est dans son état vitreux.

Selon une variante de l'invention, le polymère est de type polyéthylènetéréphtalate (PET) présentant une température de transition vitreuse de l'ordre de 67°C.

Selon une variante de l'invention, le polymère est de type polychlorure de vinyle présentant une température de transition vitreuse comprise entre environ 80°C et 85°C.

Selon une variante de l'invention, le polymère est de type polymétacrylate de méthyle atactique présentant une température de transition vitreuse de l'ordre de 107°C.

Selon une variante de l'invention, le matériau composite est un matériau stratifié de type fibres longues de carbone/ résine époxy.

Selon une variante de l'invention, la couche dite supérieure comporte en outre des éléments de type résistances chauffantes collées ou sérigraphiées.

Selon une variante de l'invention, le mètre ruban comprend en outre une couche intermédiaire d'adhésif entre la couche de matériau composite et la couche supérieure de polymère.

Selon une variante de l'invention, l'épaisseur de la couche supérieure de polymère est voisine de 0,5 millimètre.

L'épaisseur de la couche support peut être voisine de 0,2 millimètre et l'élément déployable peut présenter une longueur voisine du mètre et une largeur voisine de 60 millimètres.

L'invention a aussi pour objet une structure déployable **caractérisée en ce qu**'elle comporte en outre :
- des mètres rubans selon l'invention ;
- des moyens d'enroulement desdits mètres rubans ;
- une plate-forme à déployer par le déroulement des mètres rubans ;
- des moyens pour chauffer la couche supérieure de polymère.

Selon une variante de l'invention, la structure déployable comporte une structure d'hexapode comprenant six mètres rubans.

Selon une variante de l'invention, la structure comporte en outre un support de base et des moyens de fixation des moyens d'enroulement sur ledit support de base.

Selon une variante de l'invention, la structure déployable comporte en outre un composant optique positionné sur la plate-forme.

L'invention sera mieux comprise et d'autres avantages apparaîtront à la lecture de la description qui va suivre donnée à titre non limitatif et grâce aux figures annexées parmi lesquelles :
- la figure 1 représente une section de mètre ruban selon l'invention et présentant une courbure transversale ;
- la figure 2 représente une structure de mètre ruban selon l'invention en cours de déroulement ;
- la figure 3 représente une variante de mètre ruban selon l'invention comportant des résistances intégrées ;
- la figure 4 illustre l'évolution d'une structure en cours de déploiement utilisant des mètres rubans selon l'invention ;
- les figures 5a à 5d illustrent les différents éléments d'une structure d'hexapode utilisant des mètres rubans selon l'invention pouvant être embarquée dans un engin spatial.

L'idée de base de la présente invention repose sur l'utilisation conjointe de deux matériaux pour réaliser une structure dite de mètre ruban précontraint à déploiement actionné et régulé thermiquement.

L'invention va être décrite dans le cadre d'un mètre ruban enroulé mais peut aussi bien être déclinée dans le cadre d'un mètre ruban replié.

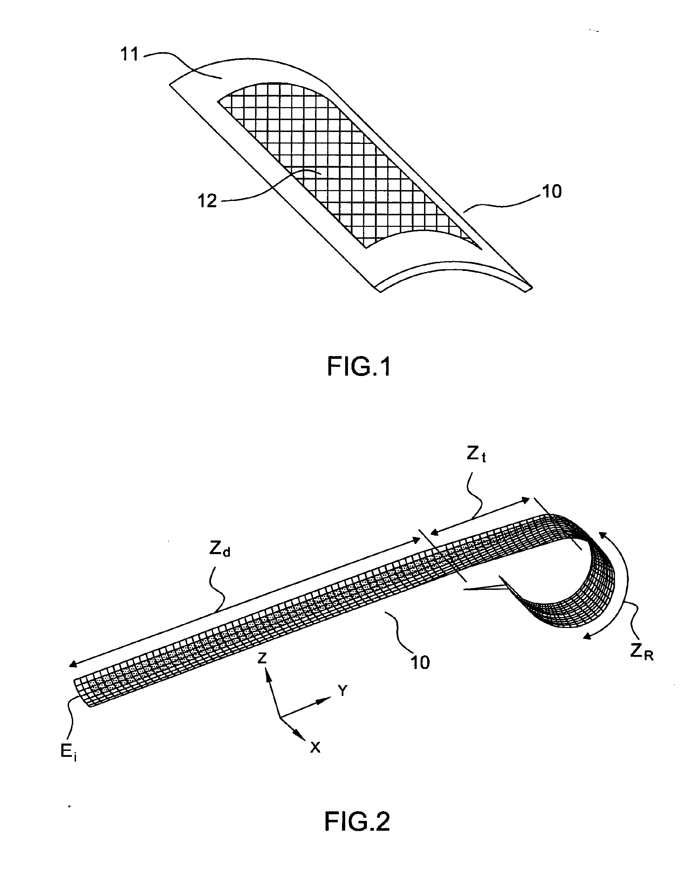

La figure 1 schématise le mètre ruban 10 selon l'invention comportant une couche support 11 et une couche supérieure 12 comprenant le polymère possédant une température de transition vitreuse élevée.

La figure 2 représente plus en détails les différentes zones du mètre ruban en cours de déploiement. Une première extrémité Ei est généralement solidarisée à un élément non représenté. Le mètre ruban 10 comporte une zone déroulée Zd, une zone de transition Zt soumise à une élévation de température permettant de réduire fortement la rigidité de la couche dite supérieure à base de polymère et une zone enroulée Zr préalablement et qui n'a pas été chauffée.

En position initiale, le mètre ruban est ainsi enroulé sur lui-même et peut être déployé selon l'invention sous l'action de la chaleur qui modifie le comportement de la couche dite supérieure à base de polymère.

Le mètre ruban est ainsi composé d'une ou plusieurs couches d'un premier matériau pouvant être, pour des applications spatiales, un composite stratifié de type fibres longues de carbone/résine époxy solidaire(s) d'une ou plusieurs couche(s) d'un polymère présentant une forte variation de rigidité entre son état vitreux et son état caoutchoutique, l'état vitreux étant l'état du matériau pour des températures inférieures à sa température de transition vitreuse et l'état caoutchoutique celui pour des températures supérieures.

La ou les couche(s) composite(s) présente(nt) une géométrie de type mètre ruban, c'est-à-dire un ruban ayant une courbure transversale.

Au moins une couche de polymère est solidaire de la couche composite. En dessous de sa température de transition vitreuse dénommée Tg, la couche de polymère est suffisamment rigide pour maintenir le mètre ruban dans son état enroulé.

Lors de l'application d'un chauffage localisé amenant le polymère au-dessus de sa température de transition vitreuse Tg, celui-ci voit sa raideur diminuer et libère ainsi progressivement sa tension sur le composite. Le mètre ruban se déroule alors spontanément et progressivement au fur et à mesure du réchauffage local de la couche de polymère.

Ainsi, la solution proposée repose sur la combinaison d'un mètre ruban en matériau composite et d'une seconde couche d'un matériau polymère standard. Ce système permet le déploiement, sous l'effet d'une élévation de température locale ou générale, du mètre ruban avec une cinétique lente et contrôlable.

Différents polymères peuvent être envisagés, ils doivent tous présenter les propriétés suivantes :
- une forte variation de rigidité entre l'état vitreux et l'état caoutchoutique,
- la température de transition vitreuse doit être compatible avec l'application envisagée. La température de transition vitreuse doit donc être supérieure aux températures auxquelles le système sera exposé avant son déploiement. Toutefois, une fois que le mètre ruban, ou la structure comportant des mètres rubans, est déployé(e), celui ou celle-ci peuvent être utilisés à des températures supérieures à la température de transition vitreuse Tg puisque la couche composite est dans son état stable et ne peut donc pas s'enrouler à nouveau seule.

Pour des applications spatiales à 20°C, un matériau comme le polyéthylènetéréphtalate (PET) présentant un saut de rigidité significatif autour de Tg=67°C est bien adapté. D'autres matériaux comme le polychlorure de vinyle (80<Tg<85°C) ou le polymétacrylate de méthyle atactique (Tg=107°C) peuvent aussi être envisagés.

Par ailleurs, les couches de polymère doivent être solidaires de la couche composite. Ceci peut être réalisé par collage, au moyen d'un adhésif et de traitements de surface adaptés (attaque chimique, décharge corona, traitement plasma). La réalisation d'une enduction à l'état fondu ou dans un solvant peut aussi être envisagée. Une autre solution peut être la polymérisation directe du polymère sur la couche composite.

Une fois la couche polymère solidaire avec la couche composite, il est possible de réaliser le premier enroulement ou pliage.

L'ensemble est porté à une température supérieure à la température de transition vitreuse Tg du matériau polymère. Dans cet état, le polymère voit sa rigidité diminuer permettant ainsi de réaliser facilement l'enroulement ou le pliage de la couche composite.

La configuration enroulée est alors figée par une descente en température sous la température de transition vitreuse Tg.

En dessous de cette température de transition vitreuse Tg, la couche polymère redevient rigide et peut alors contrer l'effort naturel de déroulement de la couche composite. Le mètre ruban est alors figé dans sa configuration enroulée.

Lors de l'application d'un chauffage amenant le matériau au-dessus de la température de transition vitreuse Tg, le polymère présente de nouveau une raideur qui diminue et peut ainsi libérer progressivement la tension sur le mètre ruban. Ce dernier se déroule alors spontanément et progressivement au fur et à mesure du réchauffage local de la couche de polymère.

Pour assurer le déroulement du mètre ruban proposé, il est nécessaire de réaliser un chauffage localisé restreint à la zone de transition du mètre ruban, c'est-à-dire la portion du ruban qui est située entre la partie enroulée et la partie déroulée.

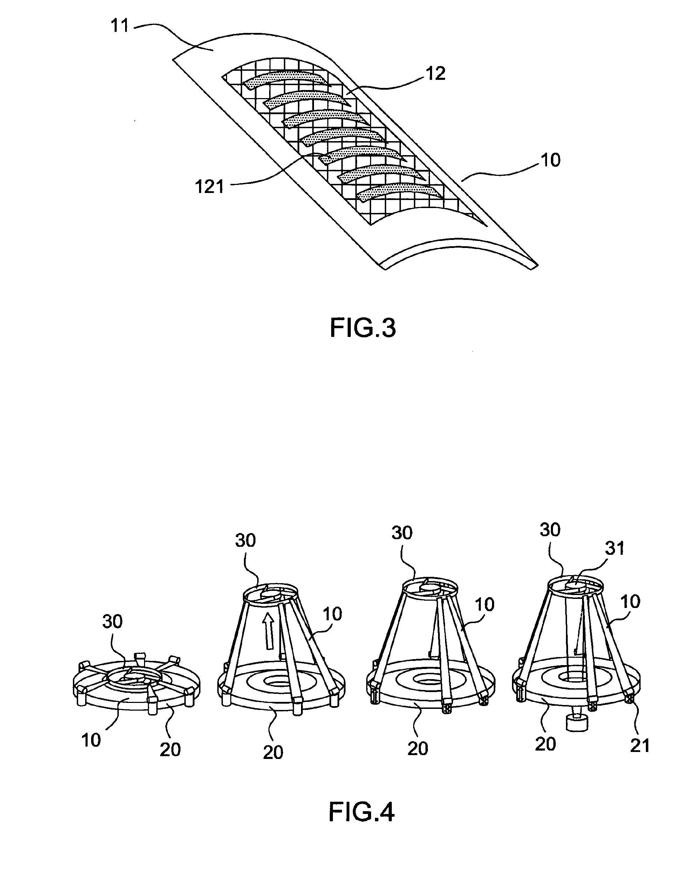

Le chauffage localisé peut être réalisé de différentes façons :
- au moyen d'une lampe infrarouge disposée face à la zone de transition,
- au moyen de résistances chauffantes collées ou sérigraphiées sur le mètre ruban, dont l'actionnement est réalisé de façon séquentielle au fur et à mesure du déploiement, comme illustré en figure 3 qui représente un mètre ruban comportant en surface de polymère des résistances chauffantes 121,
- par exposition au rayonnement solaire.

Ainsi, le mètre ruban peut être déployé sans recours à l'utilisation d'un moteur et ce avec une cinématique douce et contrôlable.

L'utilisation de ce type de mètres rubans déroulables thermiquement peut avantageusement être envisagée pour la réalisation d'un prototype d'hexapode déployable destiné à de futures structures de télescopes spatiaux. Le concept repose sur le fait de remplacer les mètres rubans métalliques et leurs mécanismes par des mètres rubans déroulables thermiquement. Ainsi, l'actionnement thermique permet de dérouler progressivement chaque ruban de l'hexapode, garantissant le positionnement de la plate forme supérieure sans choc.

La figure 4 illustre le déploiement d'une structure de type hexapode comportant des mètres rubans dont le déroulement permet le déploiement d'un objet. L'existence du faisceau lumineux représenté sur la figure signifie que la structure déployée est correctement positionnée. Par exemple, il signifie que la plate-forme 30 est correctement positionnée par rapport à l'embase 20. Ce faisceau correspond par exemple au chemin optique entre le miroir secondaire disposé sur la plate-forme 30 et un récepteur situé sous l'embase 20, il n'est donc possible que si le récepteur, lié à l'embase 20, et le miroir secondaire disposé sur la plate-forme 30 sont correctement alignés.

La structure hexapode comporte, plus précisément, six mètres rubans 10, solidaires d'une part d'une embase 20 via des moyens 21 et d'une plate-forme 30 via des moyens 31. L'embase est par ailleurs équipée de moyens d'enroulement 22 des mètres rubans 10.

En position initiale, une faible portion des mètres rubans est déployée.

Progressivement et ce à l'aide de moyens de chauffage non représentés, les mètres rubans sont déployés et permettent par là même le déploiement de la plate-forme supérieure 30 supportant généralement un composant 32 de type optique. La plate-forme supérieure 30 peut par exemple comporter un miroir secondaire permettant le renvoi du faisceau lumineux du miroir primaire, supporté par l'embase 20 vers un récepteur fixé derrière ce dernier.

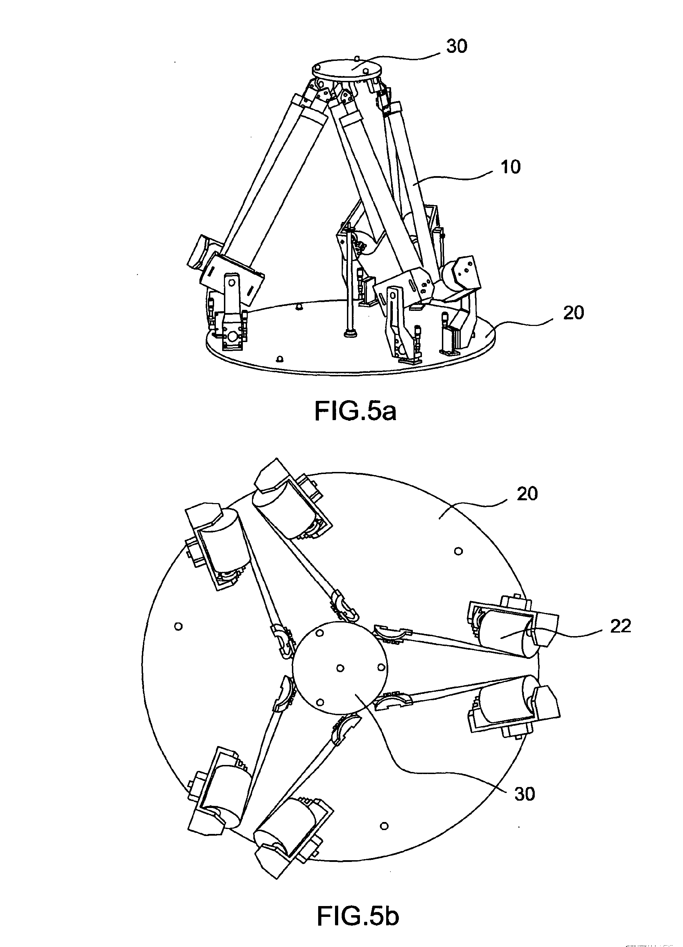

Les figures 5a à 5d illustrent différents éléments constitutifs de la structure d'hexapode, pouvant avantageusement être employée dans une structure de télescope, dont les jambes sont constituées de mètres rubans reliés d'une part à une plate-forme supérieure sur laquelle est positionné l'objet à déployer, typiquement un composant optique et une embase inférieure.

La figure 5a représente une vue en perspective des mètres rubans selon l'invention utilisés pour déployer un objet de type composant optique.

La figure 5b représente une vue de dessus de l'objet à déployer relié aux extrémités des mètres rubans.

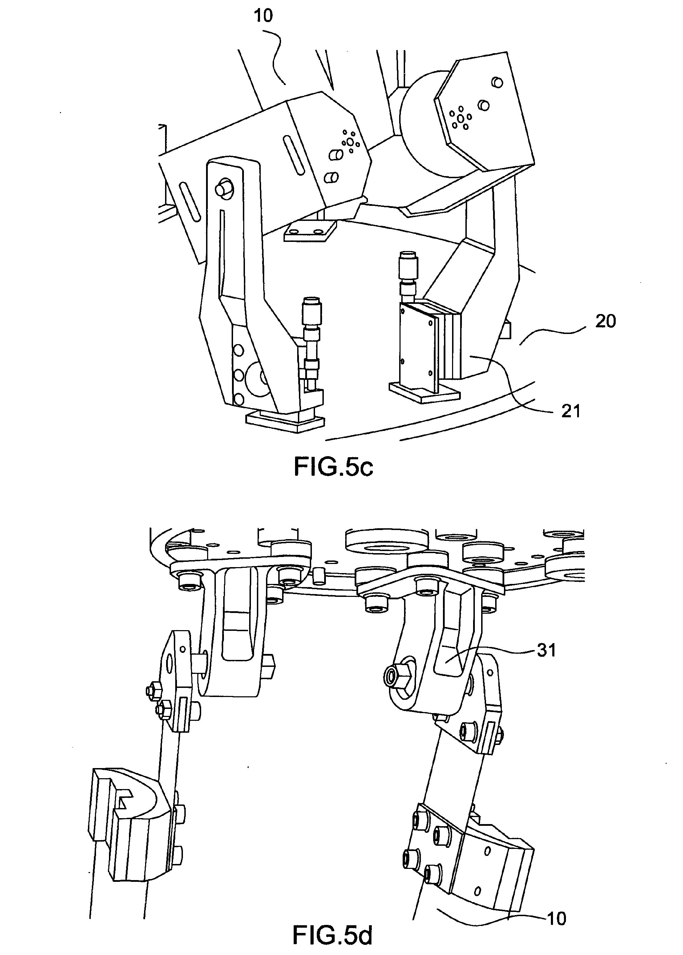

La figure 5c représente une vue de l'embase des pieds de l'hexapode et les mécanismes d'enroulement.

La figure 5d représente une vue des interfaces reliant les mètres rubans à la plate-forme supérieure.

Les principaux avantages de cette solution sont sa grande simplicité et sa robustesse : aucun mécanisme n'est nécessaire pour effectuer le déploiement. De plus, une fois celui-ci effectué, les rubans sont comme « verrouillés » par le polymère, ce qui garantit que ceux-ci ne pourront pas s'enrouler à nouveau.

De plus, le déploiement est effectué avec une cinématique relativement lente et contrôlée, ce qui garantit des très bas chocs en fin de course (par opposition aux rubans métalliques).

L'invention présentée ne requiert pas l'utilisation de résines à mémoire de forme. Elle utilise un matériau polymère standard dont le coût est bien plus faible et la disponibilité plus grande.

## Revendications

1. Ruban déployable ayant une courbure transversale dit mètre ruban (10) comprenant un empilement d'au moins deux couches **caractérisé en ce qu'**il comporte en outre une première couche dite couche support à base de matériau composite (11) comprenant une résine qui n'est pas à mémoire de forme et une couche dite couche supérieure (12) à base d'un polymère présentant une température de transition vitreuse élevée de manière à ce que ledit polymère est dans un état vitreux pour maintenir l'élément en position enroulée ou repliée avant déploiement.

2. Ruban déployable selon la revendication 1, **caractérisé en ce que** le polymère est de type polyéthylènetéréphtalate (PET) présentant une température de transition vitreuse de l'ordre de 67°C.

3. Ruban déployable selon la revendication 2, **caractérisé en ce que** le polymère est de type polychlorure de vinyle présentant une température de transition vitreuse comprise entre environ 80°C et 85°C.

4. Ruban déployable selon la revendication 2, **caractérisé en ce que** le polymère est de type polymétacrylate de méthyle atactique présentant une température de transition vitreuse de l'ordre de 107°C.

5. Ruban déployable selon l'une des revendications 1 à 4, **caractérisé en ce que** le matériau composite est un matériau stratifié de type carbone/époxy.

6. Ruban selon l'une des revendications 1 à 5, **caractérisé en ce que** la couche dite supérieure comporte en outre des éléments (121) de type résistances chauffantes collées ou sérigraphiées.

7. Ruban déployable selon l'une des revendications 1 à 6, **caractérisé en ce qu'**il comprend en outre une couche intermédiaire d'adhésif entre la couche de matériau composite et la couche supérieure de polymère.

8. Ruban déployable selon l'une des revendications 1 à 7, **caractérisé en ce que** l'épaisseur de la couche supérieure de polymère est voisine de 0,5 millimètre.

9. Ruban déployable selon l'une des revendications 1 à 8, **caractérisée en ce que** l'épaisseur de la couche support est voisine de 0,2 millimètre.

10. Ruban déployable selon l'une des revendications 1 à 9, **caractérisé en ce que** l'élément déployable présente une longueur voisine du mètre et une largeur voisine de 60 millimètres.

11. Structure déployable **caractérisée en ce qu'**elle comporte en outre :
- des rubans déployables (10) selon l'une des revendications 1 à 10 ;;
- des moyens d'enroulements desdits rubans déployables ;
- une plate-forme (30) à déployer par le déroulement des rubans déployables ;
- des moyens de déroulement des rubans déployables (22).

12. Structure déployable selon la revendication 11, **caractérisée en ce qu'**elle comporte une structure d'hexapode comprenant six rubans déployables.

13. Structure déployable selon l'une des revendications 11 ou 12, **caractérisée en ce qu'**elle comporte en outre une embase (20) et des moyens de fixation (21) des moyens d'enroulements sur ladite embase.

14. Structure déployable selon l'une des revendications 11 ou 12, **caractérisée en ce qu'**elle comporte un composant optique (23) positionné sur la plate-forme.

## Patentansprüche

1. Entfaltbares Band, Maßband (10) genannt, mit einer Querkrümmung, das einen Stapel von wenigstens zwei Schichten umfasst, **dadurch gekennzeichnet, dass** es ferner eine erste Schicht, Trägerschicht genannt, auf der Basis eines Verbundmaterials (11), das ein Harz ohne Formspeicherung beinhaltet, und eine Schicht, obere Schicht (12) genannt, auf der Basis eines Polymers mit einer hohen Glasübergangstemperatur umfasst, so dass sich das Polymer in einem vitrösen Zustand befindet, um das Element bis zur Entfaltung in der gewundenen oder gefalteten Position zu halten.

2. Entfaltbares Band nach Anspruch 1, **dadurch gekennzeichnet, dass** das Polymer vom PET-(Polyethylenterephthalat)-Typ mit einer Glasübergangstemperatur von etwa 67°C ist.

3. Entfaltbares Band nach Anspruch 2, **dadurch gekennzeichnet, dass** das Polymer vom Polyvinylchloridtyp mit einer Glasübergangstemperatur zwischen etwa 80°C und 85°C ist.

4. Entfaltbares Band nach Anspruch 2, **dadurch gekennzeichnet, dass** das Polymer vom ataktischen Polymethylmethacrylattyp mit einer Glasübergangstemperatur von etwa 107°C ist.

5. Entfaltbares Band nach einem der Ansprüche 1 bis 4, **dadurch gekennzeichnet, dass** das Verbundmaterial ein schichtweises Material des Kohlenstoff/Epoxid-Typs ist.

6. Band nach einem der Ansprüche 1 bis 5, **dadurch gekennzeichnet, dass** die obere Schicht ferner Elemente (121) des gebondeten oder siebgedruckten Heizwiderstandstyps umfasst.

7. Entfaltbares Band nach einem der Ansprüche 1 bis 6, **dadurch gekennzeichnet, dass** es ferner eine Zwischenklebstoffschicht zwischen der Schicht aus Verbundmaterial und der oberen Polymerschicht umfasst.

8. Entfaltbares Band nach einem der Ansprüche 1 bis 7, **dadurch gekennzeichnet, dass** die Dicke der oberen Polymerschicht nahe 0,5 Millimeter liegt.

9. Entfaltbares Band nach einem der Ansprüche 1 bis 8, **dadurch gekennzeichnet, dass** die Dicke der Trägerschicht nahe 0,2 Millimeter liegt.

10. Entfaltbares Band nach einem der Ansprüche 1 bis 9, **dadurch gekennzeichnet, dass** das entfaltbare Element eine Länge nahe einem Meter und eine Breite nahe 60 Millimeter hat.

11. Entfaltbare Struktur, **dadurch gekennzeichnet, dass** sie ferner Folgendes umfasst:
- entfaltbare Bänder (10) nach einem der Ansprüche 1 bis 10;
- Mittel zum Wickeln der entfaltbaren Bänder;
- eine Plattform (30) zum Entfalten durch Abwickeln der entfaltbaren Bänder;
- Mittel zum Abwickeln der entfaltbaren Bänder (22).

12. Entfaltbare Struktur nach Anspruch 11, **dadurch gekennzeichnet, dass** sie eine Hexapod-Struktur mit sechs entfaltbaren Bändern umfasst.

13. Entfaltbare Struktur nach Anspruch 11 oder 12, **dadurch gekennzeichnet, dass** sie ferner eine Basis (20) und Mittel (21) zum Befestigen der Wickelmittel an der Basis umfasst.

14. Entfaltbare Struktur nach Anspruch 11 oder 12, **dadurch gekennzeichnet, dass** sie eine auf der Plattform befindliche optische Komponente (23) umfasst.

## Claims

1. A deployable tape, referred to as tape measure (10), with a transverse curvature, comprising a stack of at least two layers, **characterised in that** it further comprises a first layer, referred to as support layer, based on a composite material (11) comprising a resin that is not a shape memory resin, and a layer, referred to as upper layer (12), that is based on a polymer with a high glass transition temperature, so that said polymer is in a vitreous state in order to keep the element in the wound or folded position until deployed.

2. The deployable tape according to claim 1, **characterised in that** said polymer is of the polyethylene terephthalate (PET) type with a glass-transition temperature of the order of 67°C.

3. The deployable tape according to claim 2, **characterised in that** said polymer is of the polyvinyl chloride type with a glass transition temperature of between approximately 80°C and 85°C.

4. The deployable tape according to claim 2, **characterised in that** said polymer is of the atactic polymethyl methacrylate type with a glass-transition temperature of the order of 107°C.

5. The deployable tape according to any one of claims 1 to 4, **characterised in that** said composite material is a laminated material of the carbon/epoxy type.

6. The tape according to any one of claims 1 to 5, **characterised in that** said upper layer further comprises elements (121) of the bonded or screen-printed heating resistance type.

7. The deployable tape according to any one of claims 1 to 6, **characterised in that** it further comprises an intermediate adhesive layer between the layer of composite material and the upper layer of polymer.

8. The deployable tape according to any one of claims 1 to 7, **characterised in that** the thickness of the upper layer of polymer is approximately 0.5 millimetres.

9. The deployable tape according to any one of claims 1 to 8, **characterised in that** the thickness of the support layer is approximately 0.2 millimetres.

10. The deployable tape according to any one of claims 1 to 9, **characterised in that** the length and the width of the deployable element are approximately one metre and 60 millimetres, respectively.

11. A deployable structure, **characterised in that** it further comprises:
- deployable tapes (10) according to any one of claims 1 to 10;
- means for winding said deployable tapes;
- a platform (30) to be deployed by unwinding the deployable tapes;
- means for unwinding the deployable tapes (22).

12. The deployable structure according to claim 11, **characterised in that** it comprises a hexapod structure comprising six deployable tapes.

13. The deployable structure according to claim 11 or 12, **characterised in that** it further comprises a base (20) and means (21) for fixing the winding means onto said base.

14. The deployable structure according to claim 11 or 12, **characterised in that** it comprises an optical component (23) located on said platform.
